# EUROPEAN PATENT SPECIFICATION

(11) **EP 3 147 430 B1**
(45) Date of publication and mention of the grant of the patent: **26.12.2018**
(21) Application number: 16186821.1
(22) Date of filing: 01.09.2016
(51) Int. Cl.: E04H 12/02, E04H 12/10, E04H 12/24, H02G 7/05, H02G 7/20

(54) **FASTENING SYSTEM COMPRISING AN ELONGATED COMPOSITE MEMBER FASTENED TO A COLUMN**
BEFESTIGUNGSSYSTEM BESTEHEND AUS EINEM LÄNGLICHEN VERBUNDBAUTEIL, DASS AN EINE STÜTZE BEFSTIGT IST
SYSTÈME DE FIXATION COMPRENANT UN ÉLÉMENT COMPOSITE DE FORME ALLONGÉE FIXÉ A UN SUPPORT

(30) Priority: 01.09.2015 NO 20151112
(43) Date of publication of application: 29.03.2017
(73) Proprietor: Statnett SF, 0423 Oslo (NO)
(72) Inventor: FJELDVIK, Hans Jørgen, 1605 Fredrikstad (NO); JENSEN, Alf Egil, 1613 Fredrikstad (NO)
(74) Representative: Heggstad, Jon Dagson

(56) References cited:
- EP-A1- 0 240 054
- WO-A1-2014/111167
- DE-C- 605 705
- US-A- 3 984 962

## Description

The present invention generally relates to an assembly or system for fastening an elongated composite member having a self-supporting shell to a column member having a column fixing member with a mounting flange.

More particularly, the present invention relates to a line-carrying composite pylon designed to provide a light-weight modular arrangement with only a few modules to enable a more efficient installation and expansion of power grids. It is an object of the present invention to provide a modular pylon arrangement that allows the pylon to be installed in two lifts with a helicopter having a load capacity of 2.800 kg. This is made possible thanks to the use of large lightweight modules and only a few nodes with multiple integrated functions. The invention is based on that the main nodes are designed for multiple configurations, so that the pylon can be constructed in several versions for on-site adaptation. For example, the pylon may be constructed with two columns (legs) with or without external guying, or with four columns and internal guying only.

US 3984962 describes a fitting for connecting a structure to an advanced composite tube. The tube consists of high strength fibers embedded in a supporting matrix material. The fitting comprises a narrow sleeve bonded to a composite tube, split rings engaging the ends of the sleeve and overlying threaded rings fastened to the structure to be connected to the tubes. When threaded together, the rings fixedly engage the split rings.

DE605705 relates to a connection of struts or transverse frames of tubular truss and frame structures, in particular for masts with grid or frame structures.

WO2014/111167 concerns a kit for mounting one or more appliances on a pole. The kit comprises a central ring, a carrier base and at least one carrier arm. The central ring has a through-hole for mounting the central ring around a pole, and a fitting surface.

EP0240054 describes a lamp fitting intended for attachment to a tube, rod or other elongate member, for example the bar of a sunshade. The lamp fitting comprises a ring which bears at least one lamp and which is to be arranged round the elongate member and attached thereto by means of attachment means, the ring having an inner surface extending over some axial distance and co-operating with the elongate member, which inner surface has a shape adapted to the cross sectional form of this elongate member

Large, hollow composite structures have a high ratio of stiffness and strength relative to weight but are highly vulnerable to concentrated loads occurring in joints between the structural members. Such joints must be reinforced, leading to an undesirable increase of weight.

Increased functionality or number of loaded attachment points leads to additional stress concentrations in main nodes. The present invention seeks to overcome the problems associated with such stress concentrations.

A main node, in this context, is meant to refer to a point in which the column and crossbeam are joined together. In addition, the main node may be an anchoring point for guy-wires, insulator strings, ladder, etc. and thus serve a variety of functions. The number of such anchoring points can easily be varied according to needs since the invention makes it possible to fasten, by welding, for example, a variety of items for the fixation of desired fixing members.

It is an object of the present invention to provide a mechanical joint that transfers concentrated loads in the main node between a hollow, lightweight, and elongated composite structure and load-bearing columns. It is a further object of the invention to provide for: easy joining suitable for helicopter assistance, great flexibility with respect to the number of columns and guy-wires, flexibility in the choice of angles between the columns and composite structure in order to conform to rough terrain, easy mounting of bolts used for joining, easy mounting of attachments for guy-wires, possibility of mounting of lifting yokes between columns, lightweight components, components with a long service-life and excellent corrosive properties, and components able to withstand the dynamic loads to which pylons are subject.

The present invention makes it possible to provide a quickly installable arrangement with only a few modules and a few nodes.

The main principle of the invention is a "universal crossbeam" with two nodes or connection points allowing for several possible configurations of the column structure and guying. The invention provides a flexible structure including only a few components and having low weight as well as high stiffness and strength.

Joints between steel and composite members are often necessary. Load points like jacking brackets and other structures subject to high surface pressures or other concentrated stresses require metal reinforcement of the composite material. It is therefore of great advantage if the number of load points between steel and composite materials are minimized for reasons like weight and manufacturing time / cost and robustness. In the present invention, therefore, many functions are assigned to a few nodes. The present invention facilitates utilizing the different materials in the best possible manner, and the amount of metal/steel is minimized. In other words, the composite material can be used where appropriate and the steel can be used at the few places where the properties of steel are preferable. The nodes are reinforced, and in the remaining structure the advantages of the composite material can be fully utilized by varying the layup and fiber direction as appropriate given the geometry and applied loads.

On a line-carrying pylon, a crossbeam has as its main function to support isolator strings and keeping together the columns. Other features integrated in the crossbeam may be manholes for passage to the top side of the crossbeam for inspection and assembly, and winch wells.

The crossbeam can have a hollow construction with a composite sandwich structure in the walls, and with reinforcing bulkheads.

The crossbeam and node for anchoring guy-wires and insulator strings have a built-in flexibility.

The present invention relates to a system, wherein an elongated composite member, such as a crossbeam having a load-bearing outer shell constituted by a composite wall member, is fastenend to an elongated member such as a column, typically a composite column. Typically, the elongated member is a column and is therefore referred to hereinafter as a column in order to clearly distinguish this member from the elongated composite member which may be formed by a crossbeam. A column, as the term is used in this specification, therefore, is typically an elongated member. An elongated composite member such as a crossbeam having a load-bearing outer shell constituted by a composite wall member is intended to refer to a hollow member or a member having a lightweight core, but not to a solid member. With solid members there is no need to transfer forces between the shell or skin on the one side of the composite member to the shell or skin on the other side of the composite member. The cross beam will normally not have an internal framework and the structure will not be a "stressed skin" as such, as the shell structure also will accommodate compressive stresses. The column extends through an opening in the elongated composite member. The opening in the elongated composite member, such as a crossbeam having a load-bearing outer shell constituted by a composite wall member, includes a first aperture having a first peripheral edge and a second aperture having a second peripheral edge through the composite wall member. The first aperture is smaller than the second aperture. The first aperture through the upper portion of the shell of the crossbeam and the second aperture through the lower portion of the shell of the crossbeam forms the opening through the crossbeam. A composite stress distribution member with a frustum-shaped section, such as a conical section, for example, extends between the first aperture and the second aperture in the composite wall member. The frustum-shaped section transitions into a first flange section having a flange opening extending along the first peripheral edge. The stress distribution member forms a through opening in the elongated composite member. A fixing member surrounding the column comprises a flange member. The flange member of the fixing member adjoins the first flange section of the stress distribution member.

The first flange section of the stress distribution member may be separate from or integral to the first peripheral edge.

Mechanical fasteners may secure the first flange section of the stress distribution member to the flange section of the fixing member and to the first peripheral edge.

The mechanical fasteners may extend through the first flange section of the stress distribution member and the flange member of the fixing member.

The system may further comprise a clamping ring extending around the column, in which case the mechanical fasteners may extend through the clamping ring.

The frustum-shaped section of the stress distribution member may transition into a second flange section and may include a flange opening extending along the second peripheral edge.

The fixing member may comprise a cylindrical or slightly conical section and the flange member of the fixing member may surround the cylindrical or slightly conical section.

The cylindrical or slightly conical section of the fixing member may include a first end and a second end, with the flange member surrounding the cylindrical or slightly conical section being secured near the first end.

The cylindrical or slightly conical section of the fixing member may comprise guy-wire anchoring points disposed at the second end or between the flange section and the second end.

The fixing member may be made of a metallic material, preferably steel or stainless steel.

The cross-section of the fixing member is adapted to the cross-section of the column so that, for example, an oval cross-section for the column will result in an oval cross-section for the fixing member.

The column may be made of a composite material.

A stress distribution member of a composite material with a frustum-shaped section having an upper, narrow end and a lower, wide end and a center axis, with an upper flange extending from the narrow, upper end of the frustum-shaped section and towards the center axis and the lower section being secured along its peripheral edge, whereby mechanical stresses can be distributed between the upper flange and the peripheral edge of the lower section, is also disclosed.

A lower flange may extend from the wide, lower end of the frustum-shaped section away from the central axis.

The wide, lower end of the frustum-shaped section can be integrated in a composite wall member of the elongated composite member.

The frustum-shaped section may be formed as the lateral surfaces of the volume between two substantially parallel planes and a cone.

The frustum-shaped section may be formed by the volume between two substantially parallel planes and a polyhedron or pyramid.

An elongated composite member having an through opening and a stress distribution member as indicated above positioned in the opening. A substantially symmetrical cross-section across the elongated composite member through a center of the stress distribution member includes a composite wall member having an upper planar section transitioning into a rounded lateral section, then into a planar bottom section followed by an upwardly facing angle formed by the frustum-shaped section of the stress distribution member and finally into the upper flange of the stress distribution member, is also disclosed.

The elongated composite member may further comprise a disc-shaped metallic member having an outer circumference and an inner circumference, embedded in the elongated composite member in such a manner that the disc-shaped metal member surrounds the through opening.

A line-carrying pylon having a crossbeam supported by two columns extending through the crossbeam. The crossbeam is formed as an elongated composite member having a self-supporting, loaded shell constituted by a composite wall member. The columns are formed by two elongated members. Each column is fastened to the crossbeam in that each column extends through separate openings. Each opening in the elongated composite member includes a first aperture having a first peripheral edge and a second aperture having a second peripheral edge through the composite wall member. The first aperture is smaller than the second aperture. A stress distribution member having a frustum-shaped section extends between the first aperture and the second aperture of the composite wall member. The frustum-shaped section transitions into a first flange section and forms a flange opening extending along the first peripheral edge. The stress distribution member forms a through opening in the elongated composite member. A fixing member surrounding the column includes a flange member. The flange member of the fixing member adjoins the first flange section of the stress distribution member, and mechanical fasteners extend through the first flange section of the stress distribution member, the upper composite wall member, the flange member of the fixing member, and the clamping ring, is disclosed.

The section of the fixing member surrounding the columns may include a first end and a second end, with the flange member surrounding the column being secured to the first end and the guy-wire anchoring points being located at the second end or between the first end and the second end. Guy-wires may extend between the guy-wire anchoring points and foundations in a terrain where the line-carrying pylon is located.

The two columns may be made of a composite material and the columns may each be split into an upper column part and a lower column part, with the upper column part being connected to the lower column part by way of a connecting piece. Typically, the columns will be slightly conical, cylindrical, oval, or have a polygonal cross-section.

The crossbeam may further comprise one or more manholes extending through the crossbeam between the two columns and winch wells for temporary deployment of a winch.

### Brief Description of the Drawings:

Fig. 1 shows a line-carrying pylon according to an embodiment of the invention;
Fig. 2 is a side and top view of a crossbeam implemented as a hollow composite member including a self-bearing shell according to the invention;
Fig. 3 is a cross-section of a crossbeam implemented as a hollow composite member including a self-supporting shell and a stress distribution member;
Fig. 3a is a schematic sectional view of a joint in a crossbeam implemented as a hollow composite member as shown in Fig. 3, in which a stress distribution member is integral;
FIG. 3b is a schematic sectional view of a joint in a crossbeam implemented as a hollow composite member as shown in Fig. 3, in which a stress distribution member are separate;
Fig. 4 is a perspective view of a column and a detail of the column;
Fig. 5 is a perspective view of a column and a detail of the column having a stress distribution member in perspective; and
Fig. 6 is a perspective view of a detail of a line-carrying pylon according to the invention.

In the following disclosure, the term "frustum-shaped" is used for referring to the main part of the stress distribution member. A frustum is defined as a three-dimensional geometric shape formed by the volume between two parallel planes and a polyhedron, typically a pyramid or cone. This description is the one that most readily describes the shape of the stress distribution member, exclusive the upper and, in some cases, lower flange. However, in the present invention said "two parallel planes" will often be slightly non-parallel and the "planes" may be slightly curved. Further, what's central to the present invention is to define the outer walls with a wall thickness and not the entire volume. The bottom will be open and the top will be partially covered by the upper flange section. Furthermore, the terms "upper" and "lower" is intended to describe positioning in accordance with the drawings in order to facilitate the description of the invention. This positioning will also be the normal positioning of the stress distribution member in order for this member to distribute the stresses caused by design loads, because the shape will contribute to a simplified steering/entry of a column to be threaded into the member, and for the member to not collect precipitation or other elements.

Hence, the term frustum-shaped may also refer to a distorted frustum where the angle of the walls relative to the planes may be different, but normally these angles will be the same to ensure favorable stress conditions. Further, the cross-section will normally be circular or slightly elliptical if the elongated body or column has an elliptical cross section. However, embodiments with a square or rectangular cross-section are contemplated. Such embodiments are considered less favorable, however, because the sharp angles may result in stress concentrations and because fibers of the composite material must be bent in sharp angles.

The term frustum-shaped is intended to exclude cylindrical. The angle or angles is/are considered necessary to ensure an advantageous stress distribution, to ensure a favorable distribution and angle of the fibers in the transition between the flange or flanges and the frustum-shaped section, and to allow easy access to the flange and members including guy-wire anchoring points and internal guy-wires in the frustum-shaped section.

The frustum-shape of the stress concentration member must form an angle of 20-70 degrees for several reasons:
There must be sufficient opening to allow access to the assembly bolts extending through the flange in the main node and the upper shell of the crossbeam from underneath, and there must be room for mountings for guy-wires and other functional members mounted to the metal joint, such as guy-wire mountings for the pylon, guy-wire mountings for the access panel, or alternatively lifting yokes for lifting two columns simultaneously. If such mountings had been located elsewhere on the pylon or crossbeam the composite pylon would have needed additional steel members to absorb stress concentrations that arise. Such additional steel parts and the reinforcements of the composite material necessary around them would have lead to an undesirable increase of weight and increased production costs.

The angle of the frustum-shaped, preferably conical, part is essential for the fiber orientation in the laminate to be able to transfer the forces within the strength limitations of the fiber laminate. This is important because an angle of close to 90 degrees would have caused a kink in the fiber orientation both at the lower and upper parts of the stress distribution member. In addition, sharp angles would have lead to very disadvantageous impairments of the material's ability to support the loads in those areas.

The upper part of the stress distribution member must end in the flange area in which the structure is designed to support these loads.

The frustum-shaped section of the stress distribution member allows for variations in the pylon configurations and guy-wires, in the form of less costly changes to the steel parts of the main node without undertaking more expensive changes to the composite members. This opens the possibility for inclination of through columns, fastening of support columns, and on-site adapted guying configurations.

### Detailed description of the invention with reference to the drawings:

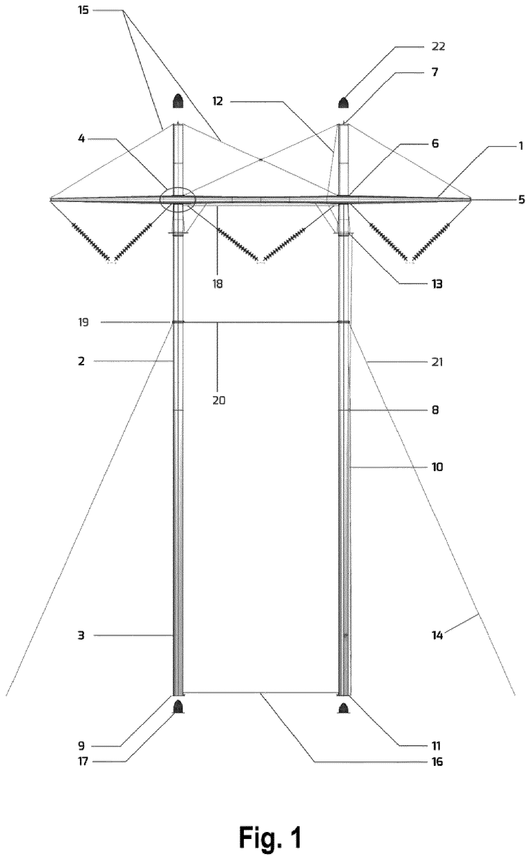

Fig. 1 shows a pylon for lines, particularly high-voltage power lines, with a connection according to the invention. The pylon comprises a composite crossbeam 1 connected to two columns having upper parts 2 with two nodes 4 or fastening systems according to the invention.

The main function of crossbeam 1 is to carry insulator strings and hold columns 2, 3 together.

The nodes 4 comprise respective clamping rings 6. Guy-wires 15 above crossbeam 2 support and stiffen or uphold the pylon. A lightning rod 12 extends from the top of the pylon down to earth. Each column includes a top conductor 22, typically of a thermoplastic material, located on steel column tops 7. Column tops 7 provide an attachment point for the lightning rod. Crossbeam 1 includes steel crossbeam ends 5. The crossbeam ends 5 serves to form attachment points for guy-wires 15 above the crossbeam, and for one end of the outermost insulator strings. Steel crossbeam ends 5 are adhesively bonded at the end of crossbeam 1 and bolted to the bulkhead.

An upper lifting yoke 18 used in an installation sequence that includes installing the columns without the crossbeam mounted thereto. The upper lifting yoke is then bolted to nodes 4, and is removed after the crossbeam has been mounted. The upper lifting yoke 18 serves to prevent the columns from buckling against each other during lifting and to ensure correct positioning when mounting the crossbeam.

An access panel 13 of a composite sandwich is integrated in each column to facilitate installation, inspection, and general access. Access panel 13 shall, among other things, provide foothold when installing insulator strings, for example, on the node. Because of the closed shape these are areas that would otherwise be difficult to access.

Crossbar mountings 19 and crossbars 20 are used for securing crossbars and guy-wires laterally 21 to columns. These are used only at locations exposed to extreme weather conditions, with a lot of wind and snow/ice in combination in order to prevent lateral movement. The guy-wires are shown secured to separate foundations located 10.4 meters laterally from the center of the column.

In an alternative embodiment, columns 2 are scaled-up so that use of external guy-wires can be avoided. The solution according to the invention is particularly suitable for a guy-less arrangement because the fastening system according to the invention is relatively flexible so that relatively large deformations are allowed before the materials are overloaded.

The upper column parts 2 and lower column parts 3 are jointed with connecting pieces 8. Due to the length of the columns 2, 3 it is desirable to split them into sections that can be conveniently transported on Norwegian roads. Thus, fiberglass connecting pieces 8 are provided. The columns 2, 3 are threaded onto/into these connecting pieces 8 and shivered in between columns and connecting pieces.

Connecting pieces 8 may serve multiple functions besides providing a joining function. Connecting pieces 8 may also serve as ladder mountings for the ladder 10 and as an insulator for lightning rod 12. Additionally, connecting pieces 8 may be designed to be the weakest link of the pylon. In case of overload, this would ensure a more controlled rupture than of the entire carbon structure fails, and may also act to reduce the risk of a cascading failure.

The ladder 10 serves to provide easy access for both installation and subsequent inspection. Ladder 10 may have a positive impact on vortex-induced vibrations (VIV).

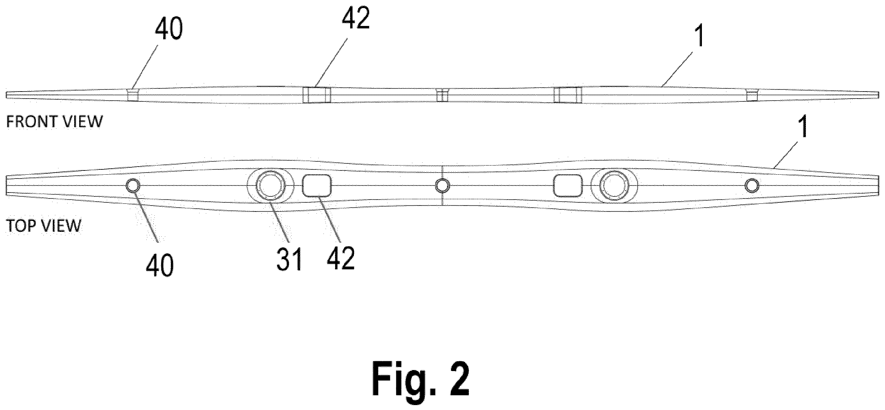

The ladder is shown herein as a wire ladder tensioned between a fiberglass mounting in the foundation flange, connecting piece 8 for columns 2, 3, access panel 13, and the manholes of the crossbeam (see Fig. 2).

The foundation flanges 9 are bolted to foundations with thermoplastic top conductors 17. Ladder attachments at the column base 11 and lightning rods can be secured to the foundation flanges 9 by way of bolts and turnbuckles. The foundation flanges 9 serves to transfer the forces from the pylon and columns down into the foundation. They may also include guy-wire attachments to the lower lifting yoke and internal guying. The foundation flanges can be made of steel.

Four external guy-wires 14 serve to support the pylon in the line direction. The actual distance to the guy-wires will depend on the geographical location and actual environmental loads. As a result of analysis and calculations for the given design loads in this study, the distance is chosen to be 20 meters from the post. This distance could potentially be reduced. The guy-wires are secured to the node 4 and to separate foundations. It has been assumed that the wire is made of galvanized steel.

Fig. 2 shows a crossbeam in a front and top perspective view. The crossbeam is subject to relatively small loads between the columns, and the cross-section between the columns is therefore reduced in order to reduce the total weight of the crossbeam, to minimize snow loads, and to give the pylon a leaner and more optimized expression. Manholes 42 are located on the inside of the columns due to the small load between the columns. Winches can be located in winch wells 40 and can be moved between the winch wells 40 by hand or by helicopter. The insulator strings are lifted/winched in place before the blocks are winched in place. Winches in winch wells can also eliminate the need for anchors, anchor mountings, jack attachments, etc. The winch can be located on the crossbeam during transport, or be lifted in place by helicopter. The crossbeam is made of a composite material and is a shell member, so that the mechanical stresses are largely supported by the shell.

A "bucket" or stress distribution member 31 is positioned in an opening in crossbeam 1 to provide attachment points for the columns.

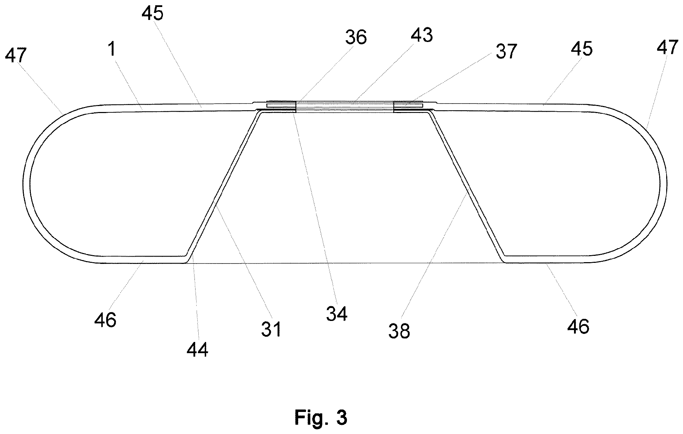

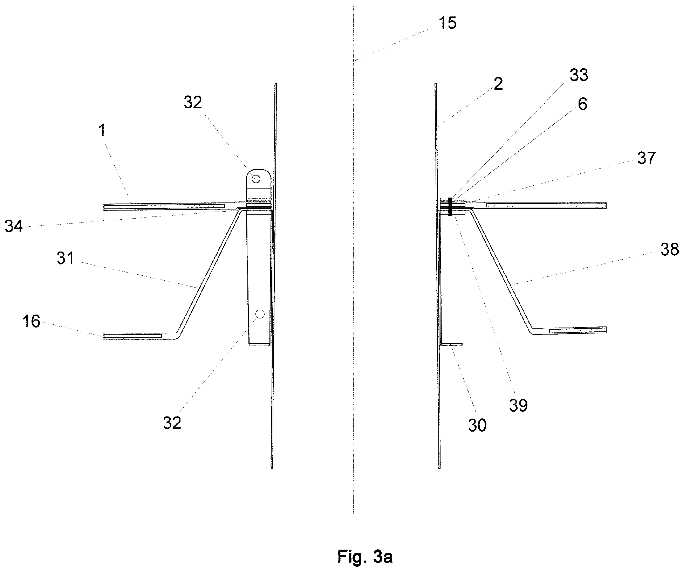

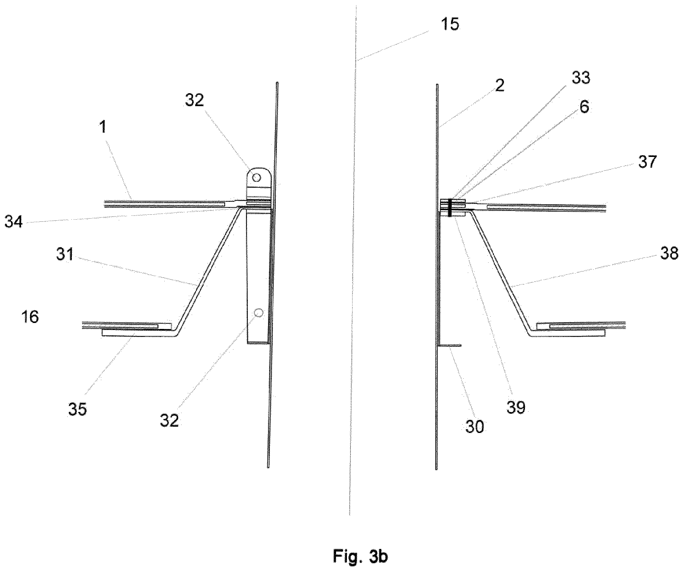

The shell of the elongated composite structure (crossbeam) 1 is largely constructed as a sandwich structure including a lightweight core material with composite laminates on each side. In the area around the hole 31 for passing through the column this shell transitions from a sandwich structure to a solid laminate (monolithic) with no core material. Also, as the loads are concentrated in a flange around the hole, the solid laminate is further reinforced with a steel ring (37 in Figs. 3a and 3b) embedded into the laminate. The purpose of this steel ring is to absorb and transfer the concentrated shear forces around the bolt connection and to absorb the compressive forces applied by the bolts to this region and prevent the visco-elastic properties of the composite material from relaxing the bolt connection as time passes. Such relaxation would require regular re-tensioning of the bolts throughout the service life of the pylon, which is very undesirable for maintenance reasons.

Fig. 3 shows a cross-section through a crossbeam 1 at a node. The crossbeam 1 is a hollow composite structure to be secured to the column. The node includes a "bucket" or stress distribution member 31. Crossbeam 1 includes a first through opening 43 through at least an upper wall section 45 of crossbeam 1, which is smaller than a second through opening 44 extending through a lower wall section 46 of crossbeam 1. The first through opening 43 includes a first edge section along the periphery of opening 43. This first edge section forms an upper wall flange 36. The upper wall flange 36 is reinforced by a metal reinforcement disc 37 surrounding the opening 43 and being embedded in the composite material of the upper wall section 45. Stress distribution member 31 includes a first flange 34 having a flange opening which has essentially the same shape and dimensions as opening 43 through the upper wall section 45 and which is integral to or separate from upper wall flange 36. The frustum-shaped section 38 of stress distribution member 31, which in this embodiment is conical, has a lower edge integrated in a lower wall section 46 of cross member 1. The first flange section 34 and upper wall flange 36 form a fastening edge section for the flange of a column fixing member (shown as 30 and 39, respectively, in Figs. 3a and 3b). The sides 47 of crossbeam 1 connect the substantially planar upper wall section 45 of the crossbeam and the lower, substantially planar bottom wall section 46 of the crossbeam. Sides 47 are rounded to improve the stress conditions in crossbeam 1 so as to reduce stress concentrations. Fig. 3 shows a configuration where the frustum-shaped connecting section 38 is conical and integrated in the lower wall section. However, the embodiment shown in Fig. 3 may also include a configuration with a separate stress distribution member 31 as shown in Fig. 3b, in which the stress distribution member then includes a lower flange facing away from the through opening.

Hence, shown in Fig. 3 is an elongated composite member 1 having a through opening 43, 44 and a stress distribution member 31 located in the opening. A substantially symmetrical cross-section across the elongated composite member through the center of stress distribution member 31 includes a composite wall. The cross-section includes an upper planar section constituted by the upper wall section 45 and transitioning into the rounded lateral section constituted by sidewall 47. The rounded lateral section then transitions into a planar base section constituted by the lower wall section 46 followed by an upwardly facing angle of between 20 and 70 degrees, inclusive, formed by the frustum-shaped connecting section 38 of the stress distribution member. The cross-section is then terminated by a horizontal section constituted by the upper flange 34 of the stress distribution member. The cross-section is symmetric about a vertical center axis.

Fig. 3a is a schematic view that corresponds to Fig. 3b, but differs from 3b in that the lower part of the frustum-shaped section 38 of stress distribution member 31 is secured directly along its peripheral edge in that stress distribution member 31 forms part of, or is integral to the self-supporting shell of the elongated composite member 1 (crossbeam). The shell is made of a sandwich material including a core 16 surrounded by composite material. Reinforcement disc 37 is embedded in the composite material around the opening in the upper shell section. Reinforcement disc 37 helps increasing the resistance to surface pressure and improving the stress distribution between the flange 39 of the column fixing member 30 and the crossbeam. Center axis 15 extends through column 2 secured to column fixing member 30. A bolt ring indicated as a bolt 33 includes a series of bolts extending along the flanges, including the first or upper flange 34 of the stress distribution member 31, and being joined together around column 2. The uppermost guy-wire mounting 32 is secured to a clamping ring 6 having substantially the same shape as reinforcing disc 37.

Column fixing member 30 includes a conduit-shaped column attachment section adapted to the shape of the column, and a mounting flange. The mounting flange is adapted to fastening edge section 36 of composite member 1. A clamping ring 6 is adapted to the mounting flange. Bolts 33 may be replaced by other mechanical fasteners clamping the one fastening edge section 36 of the composite member between the clamping ring and the mounting flange. Column fixing member 30 also includes guy-wire anchoring points 32.

Column fixing members 30 that form a node gather as many other fastening functions as possible by way of mounting holes 32, such as mountings for insulator strings, guy-wires, wire anchoring for the access panel and upper lifting yoke. Column fixing members 30 may rest on a bead extending around the column and can additionally be adhesively bonded / shivered to the upper column part.

The nodes allows for the initial mounting of the columns and then lifting into place the crossbeam in a separate helicopter lift. A steel node is contemplated. Both carbon steel S355 and stainless steel 316 are useable.

Stress distribution member 31 is made of a composite material that can be integrated into composite member 1 and has a flexibility that ensures an adequate distribution of stresses in composite member 1.

Fig. 3b essentially corresponds to Fig. 3a. The hollow composite crossbeam 1 is shown secured to stress distribution member 31. Typically, stress distribution member 31 is adhesively bonded to or embedded in composite crossbeam 1. Stress distribution member 31 is shown to include a first flange section 34 and a second flange section 35. The first flange section 34 and second flange section 35 are connected with a connecting section 38, so the first flange section 34 has a smaller diameter than the second flange section 35. These flange sections are secured in a through opening in the hollow composite crossbeam 1, forming the first aperture on the top side of composite crossbeam 1 and the second aperture at the underside of the composite crossbeam. The first aperture is smaller than the second aperture so that the first flange 34 of stress distribution member 31 fits into the first aperture in composite crossbeam 1 and so that the second flange 35 of stress distribution member 31 fits into the second aperture in composite crossbeam 1. The bolt circle with bolts 33 extends through column fixing member 30, the first flange 34 of stress distribution member 31, the edge along the first aperture in composite crossbeam 1 and clamping ring 6. The remaining reference numbers are found in the description in relation to Fig. 3a.

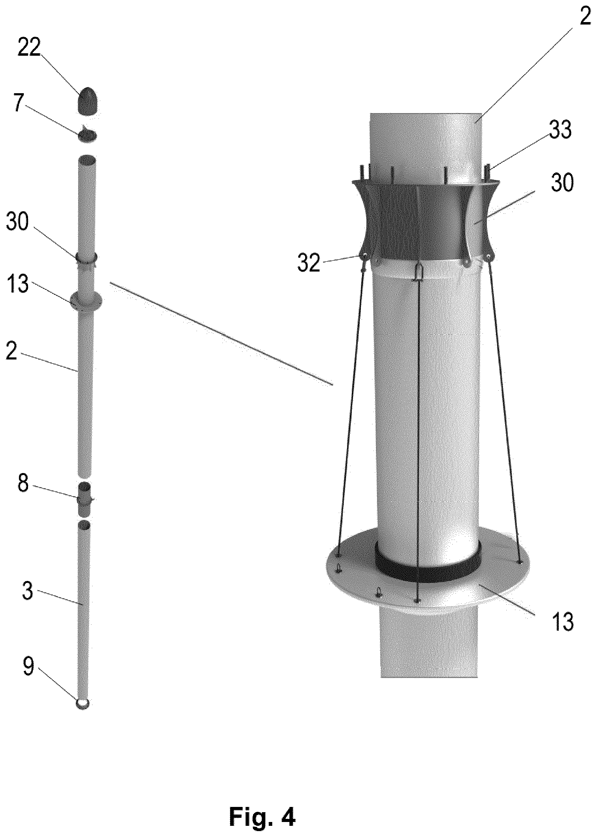

Fig. 4 is an exploded view of a column comprised by an upper column part 2, a lower column part 3, and a connecting piece 8. The main purpose of the columns is to support the entire pylon with phase lines. The columns are split in the center to facilitate transport and installation and each member is 17.5 meters high. The columns are hollow with a carbon sandwich structure in the walls.

The thermoplastic top conductor 22 of the column is secured to a steel column top member 7. Column tops 7 may include a locking mechanism for the pilot line and top line integrated into the design. The column tops serves the functions of sealing the columns in the top, providing an attachment point for the pilot and top lines, providing an attachment point for the lightning rod, providing an attachment point for guy-wires above the crossbeam, and being a jacking point for seizing the top line as well as providing an attachment point therefore after installation.

Column fixing member 30 is secured to the upper column part 2 above access panel 13. A steel foundation flange 9 is attached at the base of the lower column part.

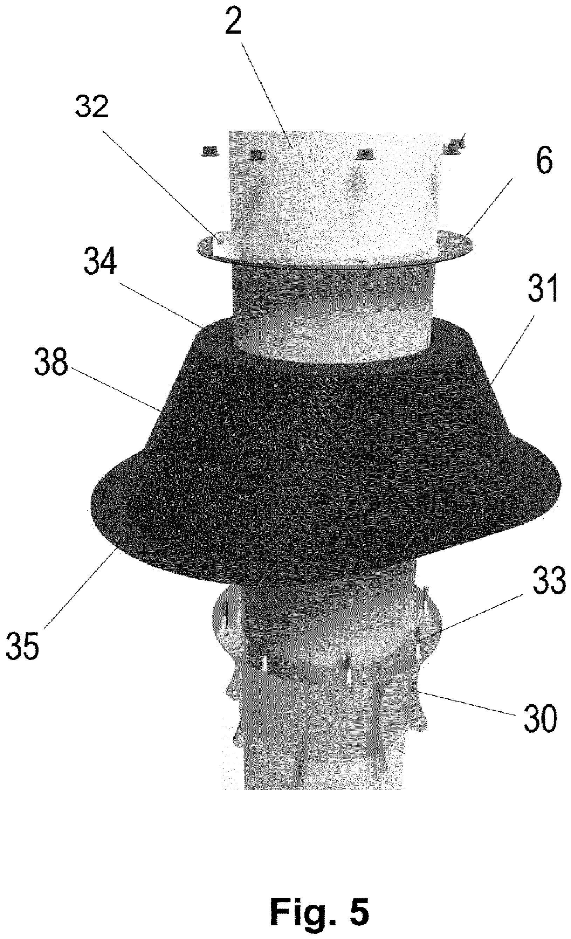

Fig. 5 is a perspective view of an upper column part 2 with a clamping ring 6 for fastening to column fixing member 30 by way of bolts 33. Stress distribution member 31 includes the first flange section 34 and second flange section 35. The first 34 and second 35 flange sections are connected to the frustum-shaped, connecting section 38. The frustum-shaped connecting section may also facilitate the insertion of the column through the crossbeam if, for example, the crossbeam is to be lowered onto a column by a helicopter. Column fixing member 30 rests on a bead extending around the upper column part 2 and prevents the column fixing member 30 from moving downward along column 2.

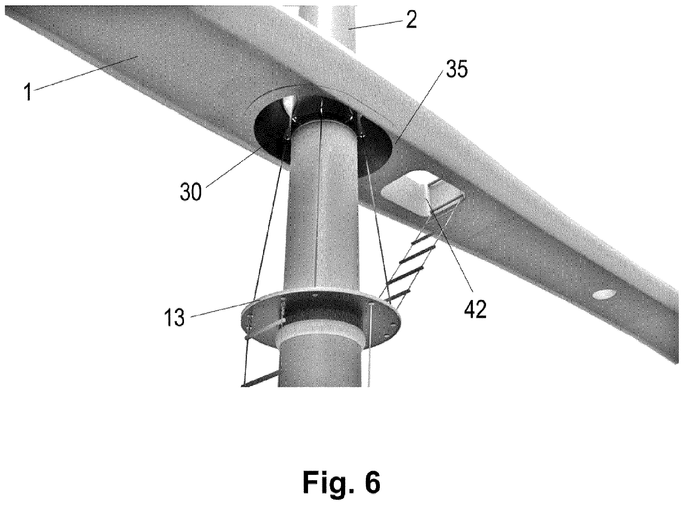

Fig. 6 is a detail of a node or connection between a column 2 and a crossbeam 1. The crossbeam's two manholes 42 are connected to a ladder of the access panel 13. Column fixing member 30 is secured to column 2 and the second flange section of the stress distribution member is shown secured along the periphery of the lower opening in crossbeam 1.

The joint shown has a certain flexibility so as to accommodate movement. This is achieved by a combination of several design features:
- Transitions in the construction in the upper shell of the hollow structure around the column passage.
- Variation in thicknesses of the laminates in the stress distribution member, flange sections, and shell.
- The geometric shape of the stress distribution member
- Glue joint between the steel column fixing member and column.

The joint is designed to allow the use of multiple materials with different properties. In particular, emphasis has been placed on utilizing the advantages of the individual materials while avoiding challenging the weaknesses of the same materials so as to achieve an optimal design.

In this disclosure, the term "composite" is intended to include composite materials, e.g. glass or carbon fiber reinforced plastics / polymer such as epoxy or polyester, for example. The term "composite" is not intended to include reinforced concrete.

A line-carrying pylon in the present context is a pylon in most cases. However, the pylon may also carry communication lines/cables and electrical power lines carrying a voltage that is lower the one than in high-voltage power lines. The term "line-carrying" is intended to include wire-carrying and cable-carrying.

## Claims

1. A fastening system comprising an elongated composite member (1) fastened to a column (2), wherein the column (2) extends through an opening in the elongated composite member (1), **characterized in that**: the elongated composite member includes a self-supporting outer shell constituted by a composite wall member, the column (2) extending through the opening in the elongated composite member (1), the opening in the elongated composite member (1) including a first aperture (43) having a first peripheral edge and a second aperture (44) having a second peripheral edge through the composite wall member, the first aperture (43) being smaller than the second aperture (44);
a composite stress distribution member (31) having a frustum-shaped section (38) extending between the first aperture (43) and second aperture (44) in the composite wall member, the frustum-shaped section (38) transitioning into a first flange section (34) having a flange opening extending along the first peripheral edge, the stress distribution member (31) forming a through opening in the elongated composite member (1); and
a fixing member (30) surrounding the column (2), comprising a flange member (39), the flange member (39) of the fixing member being adjacent to the first flange section (34) of the stress distribution member (31).

2. The fastening system of claim 1, further comprising mechanical fasteners extending through the first flange section (34) of the stress distribution member and the flange member (39) of the fixing member.

3. The fastening system of claim 1, further comprising a clamping ring (6) extending around the column (2), said mechanical fasteners further extending through the clamping ring (6).

4. The fastening system of claim 1, wherein the frustum-shaped section (38) of the stress distribution member (31) transitions into a second flange section (35) and includes a flange opening extending along the second peripheral edge.

5. The fastening system of claim 1, wherein the fixing member (30) comprises a cylindrical or slightly conical section and wherein the flange member of the fixing member surrounds said cylindrical or slightly conical section.

6. The fastening system of claim 5, wherein the cylindrical or slightly conical section of the fixing member comprises a first end and a second end, wherein the flange surrounding the cylindrical or slightly conical section is secured to the first end, and wherein guy-wire anchoring points (32) are provided between the first and second ends.

7. The fastening system of claim 1, wherein the fixing member (30) is made of a metallic material.

8. The fastening system of claim 1, wherein the column (2) is made of a composite material.

## Patentansprüche

1. Befestigungssystem, umfassend ein längliches Verbundbauteil (1), das an eine Stütze (2) befestigt ist, wobei die Stütze (2) sich durch eine Öffnung in dem länglichen Verbundbauteil (1) erstreckt, **dadurch gekennzeichnet, dass**: das längliche Verbundbauteil einen selbststützenden äußeren Mantel beinhaltet, der durch ein Verbundwandelement gebildet wird, wobei sich die Stütze (2) durch die Öffnung in dem länglichen Verbundbauteil (1) erstreckt, wobei die Öffnung in dem länglichen Verbundbauteil (1) eine erste Öffnung (43) mit einem ersten Randbereich und eine zweite Öffnung (44) mit einem zweiten Randbereich durch das Verbundwandelement beinhaltet, wobei die erste Öffnung (43) kleiner als die zweite Öffnung (44) ist;
ein Verbundspannungsverteilungselement (31), das einen kegelstumpfförmigen Abschnitt (38) aufweist, der sich zwischen der ersten Öffnung (43) und der zweiten Öffnung (44) in dem Verbundwandelement erstreckt, wobei der kegelstumpfförmige Abschnitt (38) in einen ersten Flanschabschnitt (34) übergeht, der eine Flanschöffnung aufweist, die sich entlang des ersten Randbereichs erstreckt, wobei das Spannungsverteilungselement (31) eine Durchgangsöffnung in dem länglichen Verbundbauteil (1) bildet; und
ein die Stütze (2) umgebendes Befestigungselement (30), das ein Flanschelement (39) umfasst, wobei das Flanschelement (39) des Befestigungselements an den ersten Flanschabschnitt (34) des Spannungsverteilungselements (31) angrenzt.

2. Befestigungssystem nach Anspruch 1, ferner mechanische Befestigungen umfassend, die sich durch den ersten Flanschabschnitt (34) des Spannungsverteilungselements und das Flanschelement (39) des Befestigungselements erstrecken.

3. Befestigungssystem nach Anspruch 1, ferner einen sich um die Stütze (2) erstreckenden Klemmring (6) umfassend, wobei die mechanischen Befestigungen sich ferner durch den Klemmring (6) erstrecken.

4. Befestigungssystem nach Anspruch 1, wobei der kegelstumpfförmige Abschnitt (38) des Spannungsverteilungselements (31) in einen zweiten Flanschabschnitt (35) übergeht und eine Flanschöffnung beinhaltet, die sich entlang des zweiten Randbereichs erstreckt.

5. Befestigungssystem nach Anspruch 1, wobei das Befestigungselement (30) einen zylindrischen oder leicht konischen Abschnitt umfasst und wobei das Flanschelement des Befestigungselements den zylindrischen oder leicht konischen Abschnitt umgibt.

6. Befestigungssystem nach Anspruch 5, wobei der zylindrische oder leicht konische Abschnitt des Befestigungselements ein erstes Ende und ein zweites Ende umfasst, wobei der Flansch, der den zylindrischen oder leicht konischen Abschnitt umgibt, am ersten Ende gesichert ist, und wobei Verankerungspunkte für Spanndrähte (32) zwischen dem ersten und dem zweiten Ende bereitgestellt werden.

7. Befestigungssystem nach Anspruch 1, wobei das Befestigungselement (30) aus einem Metallmaterial hergestellt ist.

8. Befestigungssystem nach Anspruch 1, wobei die Stütze (2) aus einem Verbundmaterial hergestellt ist.

## Revendications

1. Système d'attache comprenant un élément composite allongé (1) attaché à une colonne (2), dans lequel la colonne (2) s'étend à travers une ouverture située dans l'élément composite allongé (1), **caractérisé en ce que** : l'élément composite allongé comprend une enveloppe externe auto suffisante constituée d'un élément de paroi composite, la colonne (2) s'étendant à travers l'ouverture située dans l'élément composite allongé (1), l'ouverture située dans l'élément composite allongé (1) comprenant une première ouverture (43) ayant un premier bord périphérique et une seconde ouverture (44) ayant un second bord périphérique à travers l'élément de paroi composite, la première ouverture (43) étant plus petite que la seconde ouverture (44) ;
un élément composite de distribution de tension (31) ayant une section en forme de tronc de cône (38) s'étendant entre la première ouverture (43) et une seconde ouverture (44) située dans l'élément composite de paroi, la section en forme de tronc de cône (38) effectuant une transition dans une première section de bride (34) ayant une ouverture de bride s'étendant le long du premier bord périphérique, l'élément de distribution de tension (31) formant une ouverture de passage dans l'élément composite allongé (1) ; et
un élément de fixation (30) entourant la colonne (2), comprenant un élément de bride (39), l'élément de bride (39) de l'élément de fixation étant adjacent à la première section de bride (34) de l'élément de distribution de tension (31).

2. Système d'attache selon la revendication 1, comprenant en outre des pièces d'attache s'étendant à travers la première section de bride (34) de l'élément de distribution de tension et l'élément de bride (39) de l'élément de fixation

3. Système d'attache selon la revendication 1, comprenant en outre une bague de serrage (6) s'étendant autour de la colonne (2), lesdites pièces d'attache s'étendant en outre à travers la bague de serrage (6).

4. Système d'attache selon la revendication 1, dans lequel la section en forme de tronc de cône (38) de l'élément de distribution de tension (31) effectue une transition dans une seconde section de bride (35) et comprend une ouverture de bride s'étendant le long du second bord périphérique.

5. Système d'attache selon la revendication 1, dans lequel l'élément de fixation (30) comprend une section cylindrique ou légèrement conique et l'élément de bride de l'élément de fixation entourant ladite section cylindrique ou légèrement conique.

6. Système d'attache selon la revendication 5, dans lequel la section cylindrique ou légèrement conique de l'élément de fixation comprend une première extrémité et une seconde extrémité, la bride entourant la section cylindrique ou légèrement conique étant fixée à la première extrémité, et les points d'ancrage de hauban (32) étant montés entre les première et seconde extrémités.

7. Système d'attache selon la revendication 1, dans lequel l'élément de fixation (30) est constitué d'un matériau métallique.

8. Système d'attache selon la revendication 1, dans lequel la colonne (2) est constituée d'un matériau composite.
